## Europäisches Patentamt
## European Patent Office
## Office européen des brevets

(19)

(11) Publication number: **0 035 879**
**B1**

(12) **EUROPEAN PATENT SPECIFICATION**

(45) Date of publication of patent specification: **12.12.84**　　(51) Int. Cl.³: **E 05 F 15/16**

(21) Application number: **81300933.9**

(22) Date of filing: **05.03.81**

(54) **Garage door actuators.**

(30) Priority: **06.03.80 US 127760**

(43) Date of publication of application:
**16.09.81 Bulletin 81/37**

(45) Publication of the grant of the patent:
**12.12.84 Bulletin 84/50**

(84) Designated Contracting States:
**AT BE CH DE FR GB IT LI LU NL SE**

(56) References cited:
**DE-A-1 942 634**
**GB-A- 355 772**
**GB-A-1 059 967**
**US-A-2 394 163**
**US-A-4 155 269**
**US-A-4 241 540**

(73) Proprietor: **THE ALLIANCE MANUFACTURING CO. INC.**
**22790 Lake Park Boulevard**
**Alliance Ohio 44601 (US)**

(72) Inventor: **Spalding, Wilbur James**
**211 East Beech Road**
**Alliance Ohio 44601 (US)**

(74) Representative: **Meddle, Alan Leonard et al**
**FORRESTER & BOEHMERT Widenmayerstrasse 4/I**
**D-8000 München 22 (DE)**

Courier Press, Leamington Spa, England.

## Description

This invention relates to garage door actuators.

Garage door actuators have been devised and constructed for over 40 years. The concept of a longitudinally stationary but rotatable screw which acts on a travelling nut to open an overhead-type garage door was disclosed nearly 45 years ago in U.S. Patent 2,056,174. Cable-operated or chain-operated garage door actuators have also been proposed, for example, as shown by U.S. Patents 3,439,727 and 3,444,650. Typically, the garage door actuators mechanism that is the screw and a guide channel therefor extends for about eight or nine feet (2.4 or 2.7 m) in order to accommodate the length of a typical garage door plus the 90-degree angle through which the door turns. In the chain-operated garage door actuator, it has been customary for many years to shorten the package in which the door actuator is transported by cutting the guide channel into two or three parts which may be spliced together. Thus, the channel which was previously nine feet (2.7 m) long comprises three parts of about three feet (0.91 m) in length. However, the screw drive door actuators which have been marketed for many years have retained a one-piece screw and a one-piece guide means of about nine feet (2.7 m) in length, which makes the packaging costs higher and, more importantly, makes the shipping and storage costs higher because the shipping charges are usually based upon the cubic volume rather than on the weight of the package.

Recently, a screw drive garage door actuator has appeared in the market wherein the guide means is formed in two parts and the screw is formed in two parts interconnected by coupling means comprising an interconnecting link with a pivot pin at each end pivoted to the two screw parts. The guide means and screw parts are folded for shipment and then, upon installation, are straightened so as to be coaxial. Splice plates are bolted onto the sides of the guide means to maintain the coaxial alignment of the screw parts. The disadvantages of such a construction are the weakness of the coupling relative to the rest of the screw, the problem of providing a properly strengthened guide means, and the problem of whipping of the screw during rotation which occurs because the two different pivot points act somewhat like a universal joint causing the screw to whip around inside the guide means.

More importantly, the coupling for the two screw parts has so many different parts that the possible cumulative error in the tolerances of these manufactured parts can lead to mismatch of the screw threads on the two screw parts relative to the traversing partial nut, and thus the nut will fail to traverse the elongated coupling. Also, the very large number of parts from which the coupling is formed and the necessary clearance between the parts in order to allow the screw to be folded means that the coupling will tend to destroy itself upon repeated reversals of the screw. In practically all screw drive garage door actuators, the motor reverses each time it is started, first driving the screw clockwise and then driving it counterclockwise such that the nut traverses the guide channel in the actuator to close and in the other direction to open the door. This continual reversing of torque through the coupling and the looseness or "play" in all the parts will tend to batter the coupling apart, increasing the clearance of the parts and creating a high probability of mismatch of the screw threads at some stage during life of the actuator, if they are not mismatched at the time of initial assembly of the screw.

GB—A—1,059,967 describes a method of, and means for, interconnecting a pair of externally screw-threaded shafts so that a nut can run freely from one shaft to the other. Axially extending and internally screw-threaded blind bores are formed in the end of each shaft so as to have the same hand as the external threads and a pitch exactly equal to the pitch of the external threads. To connect the shafts, an externally screw-threaded spigot having a screwthread of pitch equal to that of the shaft is first engaged with the blind bore of one of the shafts so as to protrude therefrom. The protruding end thereof is then engaged in the other blind bore and the shafts are locked to the spigot by means of a pair of locking screws extending radially into the shaft and engaging with the roots of the thread on the spigot. In some cases, the locking screws may be omitted.

U.S.—A—2,394,163 relates generally to material conveying devices of screw or helical flight character and, more particularly, to improvements in sectional screw-conveyors of a type suitable for use in bin-coal stoker assemblies or the like. The screw conveyor comprises a plurality of sections each of which comprises a shaft carrying a spiral or helical flight element. A coupling element or hook-like member projects longitudinally from one end of each shaft and terminates in a finger element extending substantially radially of the shaft axis. The finger element provides a substantially planar abutment face opposed to the shaft end to define therebetween a notch or generally rectangular recess. The other end of each shaft is centrally longitudinally recessed or slotted. The slot is open to the shaft end and has one side opening to the shaft periphery. Diametrically opposite the one side opening, the slot is open to the shaft periphery at a distance from the shaft end, the extent of the second side opening being limited by a bridge of abutment piece providing a substantially planar abutment surface normal to the shaft axis. On connection of two sections, the hook-like coupling member of one section is endwise received in the slot of the other section such that the finger element is disposed behind the slot bridge and through the one side opening of the slot such that the bridge piece is received in the rectangular recess.

Neither of the two above described screw coupling provides satisfactory torque transmitting properties in both the clockwise and anticlockwise direction of rotation of the screw and therefore these screw couplings are not suitable for use in a garage door actuator.

According to the invention there is provided a garage door actuator comprising a motor-driven screw at least partially disposed within guide means, a partial nut guided by said guide means and movable longitudinally therealong by engagement with said screw and connectable to a door to open and close said door in accordance with first and second directions, respectively, of the rotation of the screw, the screw being formed in at least first and second parts, and a coupling to interconnect adjacent ends of the first and second screw parts, said coupling being disconnected for transportation of the actuator to a customer and being connectable such that in the connected condition the first screw part directly engages the second screw part to transmit both clockwise and counterclockwise rotational torque between the screw parts and the partial nut can traverse the coupling, in which actuator an extension of a coupling part of each screw part is formed with a shoulder facing away from the free end of the coupling part, said two shoulders being interengageable such that the two screw parts are disposed coaxially to transmit longitudinal tension force therebetween and either said guide means or said coupling includes means for at least partially circumscribing the interconnected ends of the screw parts to retain the coupling parts in the connected condition such that, in the connected condition, the coupling transmits torque in both directions.

Thus, the main advantages of the invention are the provision of a door actuator having a screw coupling with a minimum of parts, and hence with a minimum possible cumulative tolerance, such screw coupling having a long life and a good torque transmittal capability, and in which the coupling includes first and second hermaphrodite parts which are preferably mutually interengageable in only one manner to preclude mismatch of the threads of the screw parts when connected, relative to the traversal of the coupling by the partial nut.

In order that the invention may be readily understood, embodiments thereof will now be described by way of example, with reference to the accompanying drawing in which:

FIGURE 1 is a side elevational view, partly schematic, of a door actuator embodying the invention;

FIGURE 2 is an enlarged, side elevational view of the screw coupling of the door actuator of Figure 1;

FIGURE 3 is an enlarged, sectional view along line 3—3 of Figure 1, on the same scale as Figure 2;

FIGURE 4 is a sectional view along the line 4—4 of Figure 2;

FIGURE 5 is an enlarged, partial elevational view of the screw coupling of Figure 2 when assembled; and

FIGURE 6 is an enlarged, partial elevational view of a modified screw coupling.

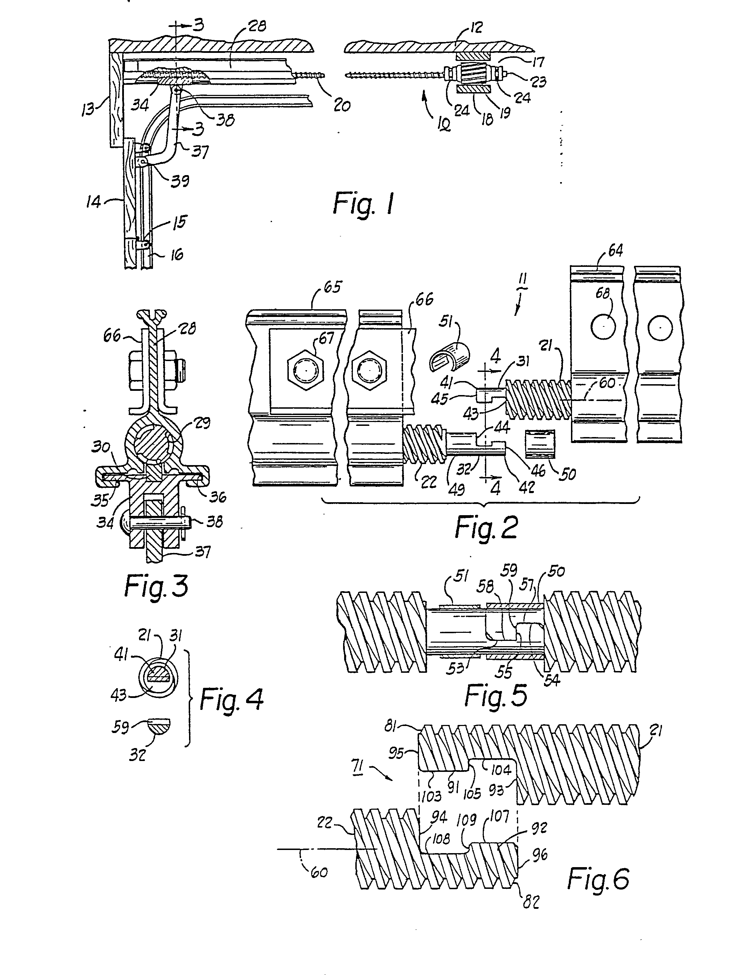

Referring now to the drawings, there is illustrated a garage door actuator 10 embodying the invention incorporating a screw coupling 11. The garage door actuator is intended to be installed within a garage having a ceiling 12 and a door header 13. The actuator 10 may open and close almost any type of enclosure, including slab doors, which can be pivoted or operate on a form of a track. However, a sectional door 14 is illustrated which has sections hinged together and provided with rollers 15 to roll on a track 16 between the closed position shown and an open position near the ceiling 12. The door actuator 10 includes a motor 17 having a stator 18 and a rotor 19, shown schematically in Figure 1. The motor 17 is connected to drive a screw 20 having first and second screw parts 21 and 22, respectively (Figure 2). The motor 17 has a shaft 23 connected to rotate the screw 20, and this shaft 23 has bearings, including thrust bearings 24, to absorb the longitudinal thrust in both directions on the screw 20.

The screw is mounted at least partially within guide means 28 which has a generally cylindrical bore 29 circumscribing about 300 degrees of the periphery of the screw 20. A partial nut 30 occupies the remaining approximately 60 degrees of the periphery of the screw 20. The partial nut 30 has a length sufficient to bridge the length of the screw coupling 11 formed by first and second coupling parts 31 and 32, respectively. The guide means 28 provides a guide not only for the screw 20, but also for the nut 30. A slide 34 has wings 35 slidably disposed in grooves 36 in the guide means 28 and carries the partial nut 30. A door arm 37 is pivotally connected at 38 to the slide 34, and at 39 to the door 14. Accordingly, as the motor 17 rotates the screw 20 in either a clockwise or counterclockwise direction, the partial nut 30, engaged with the screw 20, traverses the guide means 28 longitudinally to open or close the garage door 14.

The screw coupling 11 is better illustrated in Figures 2, 4 and 5. The first and second coupling parts 31 and 32 are hermaphroditic parts wherein the first part 31 has a male extension 41 and a female shoulder or rebate 43, and the second coupling part 32 has a male extension 42 and a female shoulder or rebate 44. The male extension 41 has a male forwardly facing shoulder 45 facing toward the free end of the coupling part and similarly, the male extension 42 has a male forwardly facing shoulder 46. In the embodiment shown in Figures 2, 4 and 5 the coupling parts 31 and 32, when interengaged as shown in Figure 5, form a reduced

diameter portion of the screw 20. The male extension 42 extends from a reduced diameter portion 49 of the second screw part 22 which is reduced in diameter in order to accommodate the internal dimensions (I.D.) of a sleeve 50 and also to accommodate the I.D. of a C-clip 51. The male extension 41 is formed by first flat portion 53 and a second flat portion 54 interconnected by rear or proximal shoulder 55 facing away from the free end of the coupling part. Similarly, the male extension 42 is provided with a third flat portion 57 and a fourth flat portion 58 interconnected by a rear facing or proximal facing shoulder 59. In this preferred embodiment, the flat portions 53, 54, 57 and 58 are parallel to the axis 60 of the screw 20, and the shoulders 55 and 59 are perpendicular to the screw axis. The flat portions 53 and 54 are axially opposed and approximately the same distance from the axis 60.

The guide means 28 is formed in two parts 64 and 65, which are shown misaligned in Figure 2 but may be aligned after the screw coupling 11 has been interconnected. Splice plates 66, only one of which is shown in Figure 2, may be provided one on each side of the guide means 28 and fastened with bolts 67 extending through apertures 68 to secure together the two parts of the guide means 28 in alignment.

The screw 20 is provided in at least two parts 21 and 22, and the guide means 28 in at least two parts 64 and 65 in order to reduce the overall length of the garage door actuator for shipping purposes. Since the shipping costs are based primarily on the volume rather than the weight of the package, reducing the length of the package to approximately half of the actual length of the actuators if the screw and guide are in two parts, or to approximately one-third if the screw and guide are in three parts, not only decreases shipping charges, but decreases storage charges, since the door actuator can be packed, shipped, and stored in a much smaller space. This is of benefit to the distributor as well as the dealer. It is also of benefit to the ultimate customer because the the prior art actuators have an elongate screw of nine to ten feet (2.7 to 3.10 m) in length which is not foldable for packing and could not therefore be brought home in the boot of an automobile by an ordinary purchaser. If the length is reduced to three and a half or five feet (1.05 or 1.5 m), however, then such transport by the ultimate user is greatly facilitated.

For shipping purposes the two parts of the screw 21 and 22 preferably extend outwardly from the respective parts 64 and 65 of the guide means, approximately as shown in Figure 2. To interconnect the screw parts sleeve 50 is first slipped over the male extension 42 onto the reduced diameter portion 49. The two screw coupling parts 31 and 32 are then disposed side-by-side and axially parallel approximately as shown in Figure 2. Next, the guide parts 64 and 65 are moved so as to be coaxial in order to interengage the coupling parts 31 and 32. Thus, the first flat portion 53 will engage the fourth flat portion 58 and the second flat portion 54 will engage the third flat portion 57. Next, the sleeve 50 may be slid to the position shown in Figure 5, and the C-clip 51 inserted over the reduced diameter portion 49, to prevent the sleeve 50 from moving back onto the reduced diameter portion 49 i.e. to the left in Figure 5 in which position the sleeve would not cover the interengaged coupling parts 31 and 32.

Next, the guide parts 64 and 65 are axially moved together, sliding over the screw 20, and the splice plates 66 bolted in place, by bolts 67 inserted through apertures 68. The door actuator 10 may then be installed against the ceiling 12 and door header 13 in the usual manner, and connected to the door 14 to move it between open and closed positions.

Figure 6 shows a modified screw coupling 71 which may replace the screw coupling 11. This screw coupling 71 has first and second coupling parts 81 and 82, respectively, which are hermaphroditic parts in that the coupling part 81 includes a male extension 91 and a female shoulder 93, and the second coupling part 82 includes a male extension 92 and a female shoulder 94. A male shoulder 95 is provided on the end of the male extension 91 and a male shoulder 96 is provided on the end of the male extension 92. The first coupling part 81 is unitary with the first screw part 21, and the second coupling part 82 is unitary with the second screw part 22. These screw parts are again rotatably guided within the guide parts 64 and 65, respectively. The first coupling part 81 is provided with first and second flat portions 103 and 104 interconnected by a rearwardly facing or proximal facing shoulder 105. Also, the second coupling part 82 is provided with a third flat portion 107 and a fourth flat portion 108 interconnected by a rearwardly facing or proximal facing shoulder 109. Just as in Figures 2 to 5, the flat portion 103 is disposed a small distance on one side of the axis 60 of the screw and the flat portion 104 is disposed substantially the same distance on the other side of the axis 60. The flat portions 103, 104, 107 and 108 are preferably parallel to the axis 60, and the shoulders 105 and 109, along with the shoulders 93 to 96, are substantially perpendicular to the axis 60.

A door actuator 10 having either the screw coupling 11 or 71 is shipped in a collapsed condition, i.e., with the two screw parts 21 and 22 disposed side-by-side within the respective guide means 64 and 65. In order to interconnect the screw parts, the user or the installer first positions the guide means 64 and 65 approximately about as shown in Figure 2 upon unpacking the actuator. The screw part 21 can already be in proper working connection with the motor 17. As shown in Figure 6, the axes of the two screw parts are parallel, but misaligned. Next, the two guide means 64 and 65 are moved transversely relative to one another such that the flat portion 103 engages the flat portion 108 and the flat portion 104 engages the flat portion 107, thus interengaging the screw coupling 71. Then, the two guide parts 64 and 65 may be axially moved together, sliding over the screw 20. With the screw part 21 operatively connected to the motor 17, the guide part 65 will be slid to the right in Figure 6 until the guide part 65 abuts guide part 64 while screw part 22 remains stationary. The splice plates 66 may then be bolted in place. The door actuator 10 may then be mounted to the ceiling 12 and the door header 13 in the usual manner.

Neither of the screw couplings 11 and 71 described above allow the two screw parts to be interconnected such that the screw threads thereof are mismatched in phase to the screw thread of the partial nut 30. A triple thread screw has been illustrated in the Figures, and in such case it is quite important that the phase of each of the two screw parts 21 and 22 at the coupling 11 or 71 be proper so that they are not mismatched relative to the partial nut 30, which will have to traverse this coupling each time the door is to be opened or closed. Because the couplings 11 or 71 are hermaphroditic couplings, i.e., couplings which have both male and female portions, it is impossible to put the coupling together in other than the correct manner. Still further, the way in which the two coupling parts interconnect minimizes the possible cumulative tolerance errors which are inherent in machining the coupling parts.

A two-piece screw for a garage door actuator which is currently on the market utilizes a multipart coupling. This screw coupling has a fork on the two adjacent ends of the screws and then an intermediate link is pivoted at each end within these two forks. This makes a type of a universal joint connection so that the two pivot points are far enough apart so that the screw may be folded back upon itself, while within the guide parts, without interference between the two guide parts. Thus a long screw coupling having many parts is formed, the cumulative tolerance error of which may be excessive and may result in mismatch of the screw threads of the screw relative to the screw thread of the partial nut. The parts for which possible cumulative tolerance errors in the longitudinal dimension may occur in the actuator already on the market are (1) the jig or fixture which holds the first screw at the correct axial position, (2) the diameter of the hole in the first fork, (3) the diameter of the hole in a first tongue, (4) the axial position of the hole in the first fork, (5) the dimension between the two pivot holes in the intermediate link, (6) the axial position of the hole in the second fork, (7) the diameter of the hole in a second tongue, (8) the diameter of the hole in the second fork, and (9) the jig or fixture which holds the second screw at the correct axial position. These will all affect the axial dimension of the screw coupling and hence the phase matching of the screw threads of the two screw parts relative to that of the nut. Additionally, there are other tolerances which affect the rotational position of one screw relative to the other, but these will be disregarded as being of less importance than the cumulative tolerance errors on the axial position. If each of the above nine dimensions is held to plus or minus 0.002 inch (0.05 mm) in tolerance, then the possible maximum accumulate error is 9 × 0.004 inch (0.1 mm) or 0.036 inch (0.9 mm). This is typically about half the width of the crest of the square thread on the screw. In such screw drive door actuators the direction of rotation of the screw is typically reversed each time the motor is started. Thus the screw will for example rotate clockwise to open the door and counterclockwise to close the door. This continuous reversal of rotation means that there is an axial compression force followed by an axial tension force on the coupling, resulting in continual battering of the coupling and increases in the dimensional errors over those occurring at the time of manufacture. The stress and shock on the coupling are perhaps worst during the initial acceleration from rest required to overcome the inertia of a typically 200 or 300 pound (91 or 136 Kg) door. Even if mismatch of the screw threads of the nut with those of the two screw parts does not occur at the time of manufacture, there is increasing likelihood that the screw threads will become mismatched on during use of the door actuator.

The screw coupling 11 or 71 of a door actuator embodying the invention minimizes such possible cumulative tolerance error. Possible cumulative tolerance errors may occur in:

(1) the axial phase position of the end of the screw thread on the first screw part 21 to the female shoulder 43 or 93;

(2) the axial dimension of the flat portion 54 or 104;

(3) the axial dimension of the flat portion 53 or 103;

(4) the axial dimension of the flat portion 57 or 107;

(5) the axial dimension of the flat portion 58 or 108; and

(6) the axial dimension between the female shoulder 44 or 94 and the same phase position of the screw thread on the second screw part 22.

Thus, at first it appears that there is only a 9:6 (3:2) improvement in the possible cumulative tolerance error. However, it will be noted that the first and second coupling parts 31 and 32 or 81 and 82 interfit, eliminating two of the possible cumulative tolerance errors. For example, suppose that the lengths of the flat portion 53 and the flat portion 58 fit together more closely that the two flat portions 54 and 57 interfit. In such a case the shoulders 44 and 45 will experience the axial compression force rather than shoulders 43 and 46. Shoulders 55 and 59, of course experience the axial tension force. This means that only the possible tolerance error in the length of the first flat portion 53 is of importance out of all the possible tolerance errors in the four flat portion lengths. Thus, together with tolerance errors of dimensions (1) and (6) listed immediately above a total of three possible tolerance dimension are of importance. If each, of these tolerance errors is established at plus or minus 0.002 inch (0.05 mm) as in the example given above, then there will be a possible cumulative tolerance error of three times 0.004 inch (0.1 mm) or 0.012 inch (10.3 mm) which is three times better than that of the screw coupling of the actuator currently on the market, and shows the advantage of the hermaphroditic interfitting coupling 11 or 71.

The coupling 11 shown in Figures 2 to 5 incorporates the sleeve 50, which is closely received on the two interfitting male extensions 41 and 42. The sleeve 50 helps absorb the clockwise or counterclockwise torque transmitted by the first screw part 21 to the second screw part 22. The load of the door 14 on the motor 17, and especially the starting and stopping acceleration and deceleration forces tend to separate the two coupling parts 31 and 32 and the sleeve 50 may therefore be made of a hardened steel to resist such torque-caused separation. In the screw coupling 71, there is the same type of torque-caused tendency to separate the two coupling parts 81 and 82. In this embodiment, this tendency is resisted by the guide means 28, which preferably, is a heavy-walled aluminium extrusion circumscribing about 300 degrees of the periphery of the screw 20. The screw coupling 71 has the advantage of providing screw threads along the entire outer periphery of the coupling, so that the partial nut rides easily along the matched screw threads at the coupling. In the screw coupling 11 shown in Figures 2 to 5, the length of the coupling 11 between threads when assembled as shown in Figure 5 is only about .75 inch (1.9 cm) including the reduced diameter portion 49, for a pitch diameter of the screw of about .5 inch (1.3 cm) and the partial nut may have a length of about 2.6 inches (6.6 cm) in a typical door actuator, so such partial nut easily spans the .75 inch (1.9 cm) screw coupling 11 whereat there are no external threads. Of course, the reduced diameter portion 49 is reduced to a diameter sufficiently small to permit the sleeve 50 to be mounted therein and such that the outside diameter thereof is less than the mean diameter of the screw 20.

The above description of the screw couplings 11 or 71 illustrates a coupling which is readily connectable by the user or installer, yet which is disconnected at the time of shipment to the ultimate customer. Phase means are provided so that the couplings are mutually interengageable in only one possible manner, precluding interconnecting of the screw parts such that the screw threads thereof are in an incorrect phase thus preventing mismatch. The phase means is provided by the hermaphroditic style of coupling. The interconnecting male and female shoulders 44 and 45, for example, provided for direct transfer of longitudinal compression force therebetween thus eliminating any whipping action such as may be caused by the double pivoted screw coupling of the prior marketed actuator. The interconnected rearwardly facing shoulders 55 and 59, or 105 and 109, directly transmit longitudinal tension forces therebetween during a door opening operation. The two couplings 11 and 71 illustrate ways in which a part of the first screw directly engages a part of the second screw for directly transmitting torque both clockwise and counterclockwise between the screw parts.

## Claims

1. A garage door actuator (10) comprising a motor-driven screw (20) at least partially disposed within guide means (28), a partial nut (30) guided by said guide means and movable longitudinally therealong by engagement with said screw and connectable to a door to open and close said door in accordance with first and second directions, respectively, of the rotation of the screw, the screw being formed in at least first and second parts (21, 22), and a coupling (11, 71) to interconnect adjacent ends of the first and second screw parts, said coupling being disconnected for transportation of the actuator to a customer and being connectable such that in the connected condition the first screw part (21) directly engages the second screw part (22) to transmit both clockwise and counterclockwise rotational torque between the screw parts and the partial nut can traverse the coupling, in which actuator an extension (41, 42, 91, 92) of a coupling part (31, 32, 81, 82) of each screw part (21, 22) is formed with a shoulder (55, 59, 105, 109) facing away from the free end of the coupling part, said two shoulders (55, 59, 105, 109) being interengageable such that the two screw parts (21, 22) are disposed coaxially to transmit longitudinal tension force therebetween and either said guide means (28) or said coupling includes means (28 or 50) for at least partially circumscribing the interconnected ends of the screw parts (21, 22) to retain the coupling parts in the connected condition such that, in the connected condition, the coupling transmits torque in both directions.

2. A door actuator according to claim 1, wherein, when the first and second screw parts (21, 22) are connected, the first screw part directly transmits longitudinal compression forces to the second screw part.

3. A door actuator according to claim 1 or 2, wherein a coupling part of each screw part is formed with a first shoulder (55, 59, 105, 109) facing away from, and a second shoulder (45, 44, 95, 94) facing toward said end of the respective screw part, said first shoulders being interengageable and said two second shoulders being interengageable such that the two screw parts are disposed coaxially.

4. A door actuator according to claim 1, 2 or 3, wherein a coupling part (31, 81) of said first screw part (21) has first (53, 103) and second (54, 109) portions, disposed in that order from the free end thereof and a coupling part (32, 82) of said second screw part has third (57, 107) and fourth (58, 108) portions disposed in that order from the free end thereof, said second and fourth portions having a smaller transverse dimension than said first and third portions, respectively.

5. A door actuator according to claim 1, 2 or 3, wherein phase means are provided in said coupling to preclude mismatch of the screw threads of the screw parts and a screw thread of the partial nut (30) when said screw parts are interconnected.

6. A door actuator according to claim 1, 2 or 3, wherein said coupling includes first and second hermaphrodite coupling parts unitary with the first and second screw parts, respectively, and mutually interengageable in only one way such that a mismatch between the screw threads of the screw parts and a screw thread of the partial nut (30) does not occur when said screw parts (21, 22) are interconnected.

7. A door actuator according to claim 6, wherein each coupling part has a shoulder (45, 46, 95, 96) and a rebate (43, 44, 93, 94) and at least the rebate of one coupling part and the shoulder of the other coupling part are interengageable.

8. A door actuator according to claim 6, wherein the coupling part (31, 81) of said first screw part has first and second portions (53 and 54, 103 and 104) disposed in that order from the end thereof and the coupling part (32, 82) of said second screw part has third and fourth (57 and 58, 107 and 108) portions disposed in that order from the end thereof, said second and fourth portions having smaller transverse dimensions than said first and third portions respectively.

## Patentansprüche

1. Garagentorantrieb (10) mit einer wenigstens teilweise in einer Führung (28) verlaufenden motorbetriebenen Gewindestange (20), einem von der Führung geführten und längs dieser durch Eingriff mit der Gewindestange beweglichen Gewindemutterstück (30), der mit einem Tor zum Öffnen und Schließen bei Drehung der Gewindestange in die eine bzw. in die andere Richtung verbunden ist, wobei die Gewindestange aus wenigstens einem ersten Teil (21), einem zweiten Teil (22) und einer Kupplung (11, 71) zur Verbindung der benachbarten Enden des ersten und des zweiten Gewindestangenteiles besteht und die Kupplung zum Transport des Antriebs zum Käufer gelöst ist und derart verbindbar ist, daß bei verbundenem Zustand der erste Teil (21) der Gewindestange den zweiten Teil (22) der Gewindestange direkt berührt zur Übertragung eines im Uhrzeigersinn und gegen den Uhrzeigersinn gerichteten Drehmoments zwischen den Teilen der Gewindestange und daß das Gewindemutterstück die Kupplung überqueren kann, wobei ein Extensionsabschnitt (41, 42, 91, 92) des Kupplungsteiles (31, 32, 81, 82) eines jeden der Gewindestangenteile (21, 22) mit einer von dem freien Ende des Kupplungsteiles fortweisenden Schulter (55, 59, 105, 109) versehen ist und die beiden Schultern (55, 59, 105, 109) derart miteinander verbindbar sind, daß die beiden Gewindestangenteile (21, 22) koaxial zur Übertragung von longitudinaler Zugkraft angeordnet sind, und entweder die Führung (28) oder die Kupplung Mittel (28 oder 50) aufweisen, die die verbundenen Enden der Gewindestangenteile (21, 22) wenigstes teilweise umgeben, um die Kupplungsteile in den verbundenen Zustand derart zu halten, daß die Kupplung in dem verbundenen Zustand ein Drehmoment in beide Richtungen überträgt.

2. Garagentorantrieb nach Anspruch 1, wobei das erste Gewindestangenteil longitudinale Druckkräfte direkt auf das zweite Gewindestangenteil überträgt, wenn das erste und das zweite Gewindestangenteil (21, 22) miteinander verbunden sind.

3. Torantrieb nach Anspruch 1 oder 2, wobei ein Kupplungsteil eines jeden der Gewindestangenteile mit einer ersten, von dem Ende des jeweiligen Gewindestangenteiles fortweisenden Schulter (55, 59, 105, 109) und einer zu dem jeweiligen Ende des Gewindestangenteiles hinweisenden zweiten Schulter (45, 44, 59, 94) gebildet ist, wobei die ersten Schultern in Eingriff zu bringen sind und die zweiten Schultern in Eingriff zu bringen sind, so daß die beiden Gewindestangenteile koaxial angeordnet sind.

4. Garagentorantrieb nach Anspruch 1, 2 oder 3, wobei ein Kupplungsteil (31, 81) des ersten Gewindestangenteiles (21) erste (53, 103) und zweite (54, 105) Abschnitte aufweist, die in dieser Reihenfolge von dessen freien Ende angeordnet sind und ein Kupplungsteil (32, 82) des zweiten Gewindestangenteiles dritte (57, 107) und vierte (58, 108) Abschnitte hat, die in dieser Reihenfolge von dessen freien Ende angeordnet sind, wobei der dritte und der vierte Abschnitt einen kleineren transversalen Durchmesser als der erste bzw. vierte Abschnitt hat.

5. Torantrieb nach Anspruch 1, 2 oder 3, wobei Phasenmittel in der Kupplung vorgesehen sind um ein Fehlpassen der Gewindegänge der Gewindestangenteile und eines Gewindeganges des Gewindemutterstücks (30) zu verhindern, wenn die Gewindestangenteile verbunden sind.

6. Torantrieb nach Anspruch 1, 2 oder 3, wobei die Kupplung erste und zweite zwittrige, mit dem ersten bzw. dem zweiten Gewindestangenteil einstückige Kupplungsteile aufweist, die beidseitig lediglich in einer Weise zusammensetzbar sind, so daß ein Fehlpassen zwischen den Gewindegängen der Gewindestangenteile und einem Gewindegang des Gewindemutterstücks (30) nicht auftritt, wenn die Gewindestangenteile (21, 22) miteinander verbunden sind.

7. Torantrieb nach Anspruch 6, wobei jedes Kupplungsteil eine Schulter (45, 46, 95, 96) und eine Ausnehmung (43, 44, 93, 94) aufweist und wenigstens die Ausnehmung eines der Kupplungsteile und die Schulter des anderen Kupplungsteiles in Eingriff zu bringen sind.

8. Torantrieb nach Anspruch 6, wobei der Kupplungsteil (31, 81) des ersten Gewindestangenteiles erste und zweite Abschnitt (53 und 54, 103 und 104) aufweist, die in dieser Reihenfolge von dessen Ende angeordnet sind und das Kupplungsteil (32, 82) des zweiten Gewindestangenteiles dritte und vierte (57 und 58, 107 und 108) Abschnitte hat, die in dieser Reihenfolge von dessen Ende angeordnet sind, wobei die zweiten und vierten Abschnitte einen geringeren transversalen Durchmesser als der zweite bzw. der vierte Abschnitt haben.

## Revendications

1. Dispositif d'actionnement de porte de garage (10) comprenant une vis entraînée par moteur (20) disposée au moins partiellement dans un moyen de guidage (28), un écrou partiel (30) guidé par ledit moyen de guidage, pouvant se déplacer longitudinalement le long de celui-ci, s'engageant avec ladite vis et pouvant être relié à une porte pour ouvrir et fermer ladite porte en accord avec respectivement un premier et un second sens de rotation de la vis, la vis comportant au moins une première et une seconde parties (21, 22) et un accouplement (11, 71) pour relier les extrémités adjacentes de la première et de la seconde parties de vis, ledit accouplement étant démonté pour le transport du dispositif d'actionnement chez un client et pouvant être monté pour qu'en position montée la première partie de vis (21) s'emboîte directement avec la seconde partie de vis (22) pour transmettre les couples de rotation dans un sens ou dans l'autre et que l'écrou partiel puisse traverser l'accouplement, caractérisé en ce que dans ce dispositif d'actionnement une extension (41, 42, 91, 92) d'une partie de couplage (31, 32, 81, 82) de chaque partie de vis (21, 22) est pratiquée avec un épaulement (55, 59, 105, 109) tournant le dos à l'extrémité libre de la partie de couplage, lesdits deux épaulements (55, 59, 105, 109) pouvant s'emboîter l'un avec l'autre de manière à ce que les deux parties de vis (21, 22) soient disposées coaxialement et puissent transmettre la force de tension longitudinale entre elles, et en ce que soit le moyen de guidage (28), soit ledit accouplement comprend des moyens (28 ou 50) pour entourer au moins partiellement les extrémités reliées entre elles des parties de vis (21, 22) et retenir les parties de couplage en position assemblée, de manière à ce qu'en position assemblée l'accouplement transmette le couple dans les deux directions.

2. Dispositif d'actionnement de porte suivant la revendication 1, caractérisé en ce que lorsque la première et la seconde parties de vis sont reliées entre elles, la première partie de vis transmet directement à la seconde partie la force de compression longitudinale.

3. Dispositif d'actionnement de porte suivant la revendication 1 ou 2, caractérisé en ce qu'une partie de couplage de chaque partie de vis est faite d'un premier épaulement (55, 59, 105, 109) tournant le dos à et d'un second épaulement (45, 44, 95, 94) faisant face à ladite extrémité de leurs parties de vis respectives, lesdits premiers épaulements s'emboîtant les uns dans les autres et lesdits seconds épaulements s'emboîtant les uns dans les autres de manière à ce que les deux parties de vis soient disposées coaxialement.

4. Dispositif d'actionnement de porte suivant la revendication 1, 2 ou 3, caractérisé en ce qu'une partie de couplage (31, 81) de ladite première partie de vis (21) comporte une première (53, 103) et une seconde (54, 109) parties disposées dans cet ordre à partir de l'extrémité libre, et en ce qu'une partie de couplage (32, 82) de ladite seconde partie de vis comporte une troisième (57, 107) et une quatrième (58, 108) parties disposées dans cet ordre à partir de l'extrémité libre, lesdites seconde et quatrième parties ayant une dimension transversale plus petite que la première et la troisième parties respectivement.

5. Dispositif d'actionnement de porte suivant la revendication 1, 2 ou 3, caractérisé en ce que des moyens de mise en phase sont fournis dans ledit accouplement pour prévenir la non-coïncidence entre les filets des parties de vis et un filet de l'écrou partiel 30 lorsque lesdites parties de vis sont reliées.

6. Dispositif d'actionnement de porte suivant la revendication 1, 2 ou 3, caractérisé en ce que ledit accouplement comprend une première et une seconde parties de couplage hermaphrodites, faites d'une pièce avec la première et la seconde parties de vis respectivement, en s'emboîtant l'une dans l'autre d'une seule manière si bien qu'une non-coïncidence entre les filets des parties de vis et un filet de l'écrou partiel (30) ne se produit pas lorsque les deux parties de vis (21, 22) sont assemblées.

7. Dispositif d'actionnement de porte suivant la revendication 6, caractérisé en ce que chaque partie de couplage comprend un épaulement (45, 46, 95, 96) et un redans (43, 44, 93, 94) et en ce qu'au moins le redans de l'une des parties de couplage et l'épaulement de l'autre partie de couplage s'emboîtent l'une avec l'autre.

8. Dispositif d'actionnement de porte suivant la revendication 6, caractérisé en ce que la partie de couplage (31, 81) de ladite première partie de vis comprend une première et une seconde parties (53 et 54, 103 et 104) disposées dans cet ordre à partir de son extrémité libre et en ce que la partie de couplage (32, 82) de ladite seconde partie de vis comprend une troisième et une quatrième parties (57 et 58, 107 et 108) disposées dans cet ordre à partir de son extrémité libre, lesdites seconde et quatrième parties ayant des dimensions transversales plus petites que lesdites première et troisième parties, respectivement.

Fig. 1

Fig. 2

Fig. 3

Fig. 4

Fig. 5

Fig. 6